# EUROPEAN PATENT SPECIFICATION

(11) **EP 4 044 567 B1**
(45) Date of publication and mention of the grant of the patent: **29.10.2025**
(21) Application number: 20890828.5
(22) Date of filing: 13.11.2020
(51) Int. Cl.: H04R 1/04, H04R 1/38, H04R 7/04, H04R 19/00, H04M 1/03, H04M 1/02, H04R 19/04

(54) **TERMINAL DEVICE**
ENDGERÄT
DISPOSITIF TERMINAL

(30) Priority: 20.11.2019 CN 201911141934
(43) Date of publication of application: 17.08.2022
(73) Proprietor: Huawei Technologies Co., Ltd., Longgang District Shenzhen, Guangdong 518129 (CN)
(72) Inventor: DING, Yue, Shenzhen, Guangdong 518129 (CN); YEH, Chien Feng, Shenzhen, Guangdong 518129 (CN); SHAN, Haibo, Shenzhen, Guangdong 518129 (CN); JIN, Mingyu, Shenzhen, Guangdong 518129 (CN)
(74) Representative: Maiwald GmbH
(86) International application number: PCT/CN2020/128651
(87) International publication number: WO 2021/098600

(56) References cited:
- WO-A1-2019/179149
- CN-A- 102 131 140
- CN-A- 104 507 029
- CN-U- 203 416 415
- CN-U- 204 291 393
- CN-U- 205 946 166
- CN-U- 208 548 931
- US-A1- 2015 084 902
- US-A1- 2016 007 107
- US-A1- 2020 045 151

## Description

### TECHNICAL FIELD

This application relates to the field of acoustic-electric conversion technologies of an electronic device, and in particular, to a terminal device.

### BACKGROUND

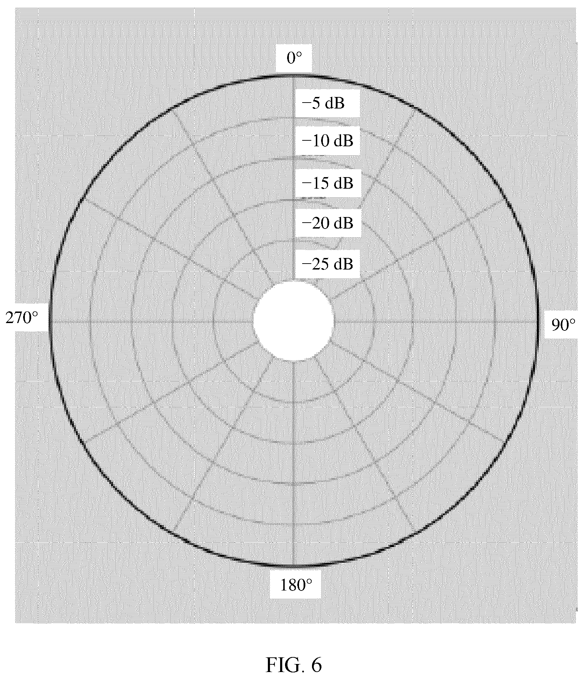

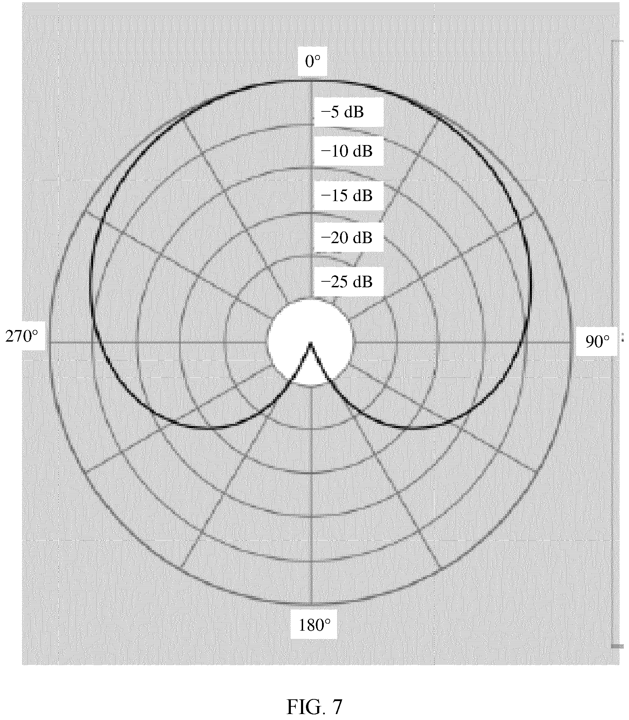

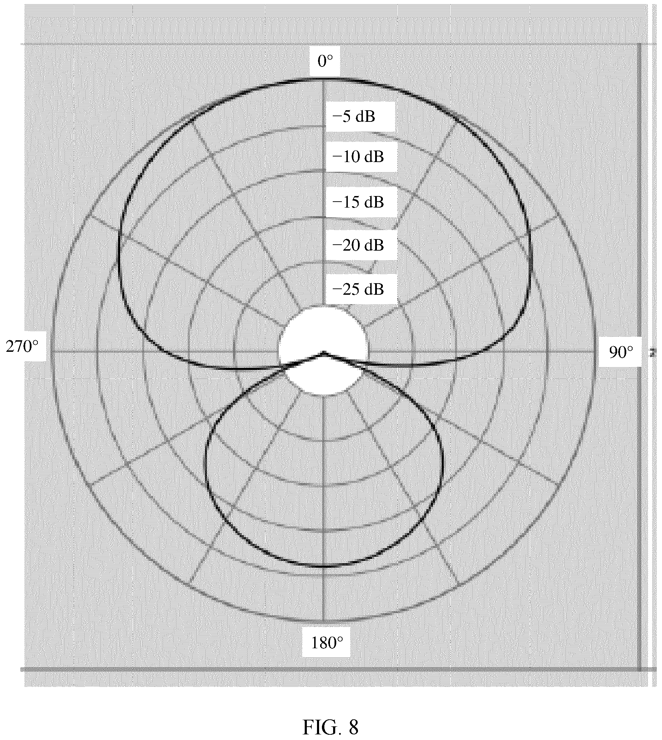

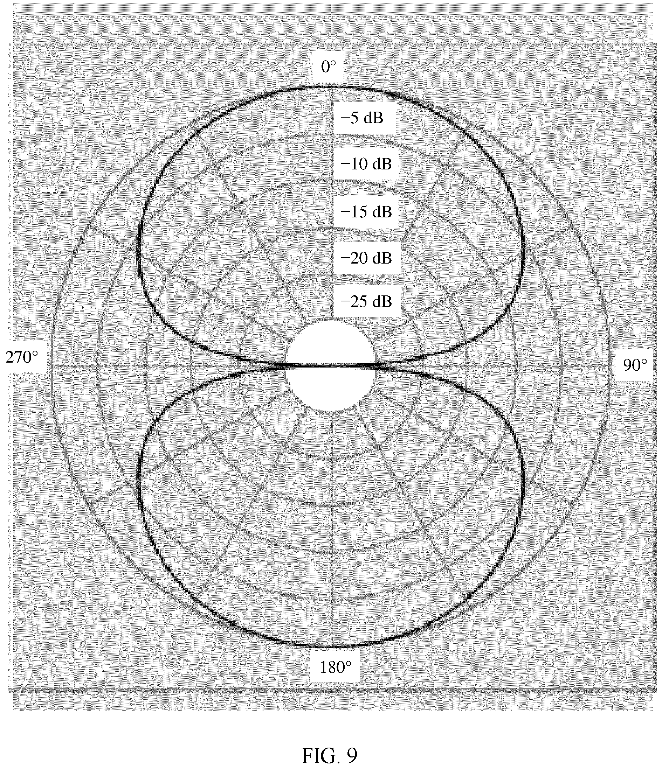

Currently, as shown in FIG. 6 to FIG. 9, microphone directivity includes the following types: omnidirectivity (refer to FIG. 6), cardioid directivity (refer to FIG. 7), hypercardioid directivity (refer to FIG. 8), and bidirectivity (that is, figure-8 directivity, refer to FIG. 9). An omnidirectional microphone uses a pressure-type design, has same sensitivity to sounds from different angles, has a sound pickup characteristic of picking up sounds from all angles, and is mainly applicable to a scenario in which a direction of a sound source is uncertain. A bidirectional microphone, also referred to as a figure-8 microphone, uses a differential-pressure-type design, picks up sounds from the front and the back but suppresses a sound from a side, and is applicable to scenarios such as a two-person dialog in an interview. A cardioid directional microphone and a hypercardioid directional microphone usually use both a pressure-type design and a differential-pressure-type design, are significantly more sensitive to the front than to the back, suppress an impact of sounds from the back and a side (when the front of the microphone directly faces a direction a sound from which is desired to be picked up, a picked-up sound from the back is comparatively small), and are applicable to a scenario in which a sound pickup direction is specified.

As a terminal device such as a mobile phone becomes smaller and thinner, a microphone used in the mobile phone is usually a MEMS (micro-electro-mechanical system, Micro Electro Mechanical System) microphone. The MEMS microphone is an acoustic-electric converter made based on MEMS technology, and has features such as a small volume, a good frequency response characteristic, and low noise. A conventional MEMS microphone includes a MEMS chip, an ASIC (Application Specific Integrated Circuit, functional integrated circuit) chip, a housing, and a printed circuit board. The product has one sound pickup hole, which is on the housing or the printed circuit board. If the sound pickup hole is on the printed circuit board, the sound pickup hole is located under the MEMS chip. Sounds enter the microphone through the sound pickup hole and act on a diaphragm of the MEMS chip. Then, an electrical signal is generated. The ASIC chip processes the electrical signal, and sends the electrical signal to the printed circuit board through a conducting wire. Then, the signal is obtained. Because there is only one sound pickup hole, the sounds have consistent loudness and consistent sensitivity when arriving at the sound pickup hole. Therefore, a MEMS microphone with this type of structure is an omnidirectional microphone. Sounds picked up by the MEMS microphone with this type of structure are sounds from all directions around. Loudness of the sounds picked up in all the directions is consistent. Therefore, directional recording or bidirectional recording (that is, picking up sounds that are from directions directly facing the front and back of the microphone) cannot be implemented.

However, in recent years, with development of hardware of a terminal device such as a mobile phone, application scenarios increase. For example, video recording, live streaming, video calling, WeChat calling, and the like become mainstream applications. When shooting a video, a user wants to pick up a sound that is from a video shooting direction, and lessen a sound that is in an ambient environment. When being in a video call or WeChat call, the user wants to pick up a sound that is from a user speaking direction. When performing live streaming, the user wants to pick up both a sound that is from a video shooting direction and a sound that is directly from a speaking direction of the user. However, MEMS microphones currently used in mobile phones are all omnidirectional microphones, and directional recording or bidirectional recording cannot be implemented.

Currently, a common technical solution is to use a plurality of microphones to pick up, by using an algorithm, a sound that is from a specified direction or sounds that are from directions directly facing the front and back of the terminal device. However, due to constraints caused by a size of the terminal device and a position of the microphone in the terminal device, an effect is not good enough when the sound that is from a specified direction or the sounds that are from directions directly facing the front and back of the terminal device are picked up. In addition, the plurality of microphones occupy comparatively large space, and use costs are comparatively high. The US 2016 / 007 107 A1 refers to a micro-mechanical systems microphone assembly. The US 2015 / 084 902 A1 refers to an electronic device. The CN 208 548 931 U refers to mobile communication devices.

### SUMMARY

An objective of this application is to resolve prior-art problems that exist when a terminal device uses a plurality of microphones to pick up, by using an algorithm, a sound that is from a specified direction or sounds that are from two directions: An effect is not good enough when a sound directly from a shooting direction, a sound directly from a user speaking direction, or sounds from directions directly facing the front and back of the terminal device are picked up; comparatively large space is occupied; and use costs are comparatively high. Therefore, an embodiment of this application provides a terminal device, which can implement better microphone directivity by using a single microphone and without using an algorithm, thereby improving a directional sound pickup effect or a bidirectional sound pickup effect of the terminal device. In addition, only the single microphone needs to be used, and therefore comparatively small space is occupied and use costs are comparatively lowthereby implementing a comparatively small occupied space and comparatively low use costs. The present application is defined in the appended independent claim. Further implementations are disclosed in the pending dependent claims. In the following, implementations not falling within the scope of the claims are to be understood as examples useful for understanding the claims.

An embodiment of this application provides a terminal device, including a housing, a display screen disposed opposite to the housing, and a microphone located in the terminal device. The microphone includes a microphone housing, a microphone circuit board, and a micro-electro-mechanical system chip. The microphone housing is disposed on the microphone circuit board, and forms a microphone chamber with the microphone circuit board. The micro-electro-mechanical system chip is disposed on the microphone circuit board and is located in the microphone chamber. The micro-electro-mechanical system chip has a diaphragm, and one side of the diaphragm is disposed opposite to the microphone circuit board. AA part that is of the micro-electro-mechanical system chip and that is located on the one side of the diaphragm and the microphone circuit board form a chip chamber with the microphone circuit board. A first sound inlet hole is disposed on the back of the housing, and a second sound inlet hole is disposed on the front of the display screen.

The chip chamber is connected to the outside of the back of the housing through the first sound inlet hole, and the microphone chamber is connected to the outside of the front of the display screen through the second sound inlet hole, so that a sound wave from the back of the housing passes through the first sound inlet hole and acts on the one side of the diaphragm, and a sound wave from the front of the display screen passes through the second sound inlet hole and acts on the other side of the diaphragm, where the one side of the diaphragm is disposed opposite to the other side of the diaphragm.

The terminal device further includes a damping piece. The damping piece is located on a path on which a sound wave passes through the second sound inlet hole and acts on the other side of the diaphragm, so that the sound wave entering from the second sound inlet hole passes through the damping piece and acts on the other side of the diaphragm.

In the solutions in this application, when the foregoing structure is used, a sound wave from a side on which the back of the terminal device is located (that is, a side on which the back of the housing is located) passes through the first sound inlet hole and acts on the one side of the diaphragm, and a sound wave from a side on which the front of the terminal device is (that is, a side on which the front of the display screen is) passes through the second sound inlet hole and acts on the other side of the diaphragm. In addition, the damping piece can change an amplitude value and a phase that are of a sound pressure acting on the other side of the diaphragm. Therefore, the damping piece with an appropriate damping factor may be disposed to implement better microphone directivity, thereby improving a directional sound pickup (that is, picking up a sound that is from a direction directly facing the back of the terminal device) effect or a bidirectional sound pickup (that is, picking up sounds that are from directions directly facing the front and back of the terminal device) effect of the terminal device. In addition, to implement the directional sound pickup effect or the bidirectional sound pickup effect, only a single microphone needs to be used, and therefore comparatively small space is occupied and use costs are comparatively low.

In some embodiments, the damping piece is located outside the microphone on the path on which the sound wave passes through the second sound inlet hole and acts on the other side of the diaphragm.

In the solutions in this application, the damping piece is disposed outside the microphone. Therefore, when the terminal device is assembled, the microphone may be mounted to a terminal circuit board to form an integral structure, and then the damping piece is mounted. In this case, when a surface-mount process including high-temperature processing and reheating is performed for assembly of the microphone and mounting of the microphone to the terminal circuit board, the damping piece does not need to undergo high-temperature processing with the microphone, thereby improving use reliability of the damping piece.

In some embodiments, the terminal device further includes another damping piece. The another damping piece is located on a path on which a sound wave passes through the first sound inlet hole and acts on the one side of the diaphragm, so that the sound wave entering from the first sound inlet hole passes through the another damping piece and acts on the one side of the diaphragm.

In the solutions in this application, the another damping piece is disposed on the path on which a sound wave from the side on which the back of the terminal device is located passes through the first sound inlet hole and acts on the one side of the diaphragm. The another damping piece can change an amplitude value and a phase that are of a sound pressure acting on the one side of the diaphragm. Therefore, the damping piece with an appropriate damping factor and the another damping piece with an appropriate damping factor may be disposed to implement better microphone directivity, thereby improving the directional sound pickup effect or the bidirectional sound pickup effect of the terminal device. In addition, the microphone can be adjusted to be a required cardioid directional microphone or a bidirectional microphone by adjusting the damping factors of the two damping pieces, thereby featuring higher flexibility in adjustment.

In some embodiments, the another damping piece is located outside the microphone on the path on which the sound wave passes through the first sound inlet hole and acts on the one side of the diaphragm.

In the solutions in this application, the another damping piece is disposed outside the microphone. Therefore, when the terminal device is assembled, the microphone may be mounted to the terminal circuit board to form an integral structure, and then the another damping piece is mounted. In this case, when the surface-mount process including high-temperature processing and reheating is performed for assembly of the microphone and mounting of the microphone to the terminal circuit board, the another damping piece does not need to undergo high-temperature processing with the microphone, thereby improving use reliability of the another damping piece.

In some embodiments, the terminal device further includes a camera, where the housing faces an object when the camera performs shooting. A connection line between a center point of one end that is of the second sound inlet hole and that is connected to the outside of the terminal device and a center point of one end that is of the first sound inlet hole and that is connected to the outside of the terminal device is parallel to a center line of a viewing angle of the camera or forms an included angle with the center line of the viewing angle of the camera, where the included angle is less than 30°. In this way, a maximum sensitivity direction in a polar circle formed by the microphone is parallel or roughly parallel to a direction of the camera, to ensure that a 0° direction in the polar circle does not deviate from the direction of the camera, or a deviation angle is comparatively small.

In some embodiments, the terminal device further includes the terminal circuit board. The terminal circuit board is disposed inside the housing and opposite to the display screen, and the microphone circuit board is disposed on the terminal circuit board.

A first sound pickup hole connected to the chip chamber is disposed on a side that is of the microphone circuit board and that directly faces the diaphragm, and the first sound pickup hole is connected to the first sound inlet hole, so that the sound wave from the back of the housing passes through the first sound inlet hole and the first sound pickup hole sequentially, enters the chip chamber, and acts on the one side of the diaphragm.

A second sound pickup hole connected to the microphone chamber is disposed on the microphone circuit board or the microphone housing, and the second sound pickup hole is connected to the second sound inlet hole, so that the sound wave from the front of the display screen passes through the second sound inlet hole and the second sound pickup hole sequentially, enters the microphone chamber, and acts on the other side of the diaphragm.

In some embodiments, the terminal device further includes a support. The support is disposed on a side on which the terminal circuit board is disposed opposite to the display screen. A connecting channel connecting the second sound inlet hole and the second sound pickup hole is formed in the support, so that the sound wave from the front of the display screen passes through the second sound inlet hole, the connecting channel, and the second sound pickup hole sequentially, enters the microphone chamber, and acts on the other side of the diaphragm.

In some embodiments, the second sound pickup hole is disposed on a top wall that is of the microphone housing and that is disposed opposite to the microphone circuit board, and does not overlap the micro-electro-mechanical system chip. The connecting channel includes a first connecting section and a second connecting section. The first connecting section extends in a direction parallel to the front of the display screen, and one end of the first connecting section is connected to the second sound inlet hole. The second connecting section extends in a thickness direction of the terminal device, one end of the second connecting section is connected to the other end of the first connecting section, and the other end of the second connecting section is connected to the second sound pickup hole. In this way, a path connecting the second sound inlet hole and the second sound pickup hole can be shortened. This design is particularly suitable for a miniaturized terminal device.

In some embodiments, the support covers the microphone housing and is hermetically connected to the microphone housing, and a side that is of the support and that faces the display screen is fixed on and hermetically connected to the display screen. In this way, the connecting channel is formed as a sealed channel, so that the sound wave from a side on which the front of the terminal device is passes through the second sound inlet hole, the connecting channel, and the second sound pickup hole sequentially, all enters the microphone chamber, and finally acts on the other side of the diaphragm.

In some embodiments, the damping piece is located in the connecting channel, one side of the damping piece is fixed on and hermetically connected to the back of the display screen, and the damping piece completely covers the second sound inlet hole.

In some embodiments, a through hole completely covering the first sound pickup hole is disposed on a part that is of the terminal circuit board and that directly faces the first sound pickup hole. The first sound inlet hole straightly extends to the front of the housing, and is connected to the first sound pickup hole through the through hole.

In some embodiments, an inner wall side of one end that is of the first sound inlet hole and that is connected to the through hole has a groove recessed into the inner wall side, and one end of the groove extends to the front of the housing. When the another damping piece is disposed on the path on which the sound wave passes through the first sound inlet hole and acts on the one side of the diaphragm, the another damping piece is located in the groove and completely covers the through hole. One side of the another damping piece is fixed on and hermetically connected to the other end of the groove, and the other side of the another damping piece is fixed on and hermetically connected to a side that is of the terminal circuit board and that faces away from the microphone.

In some embodiments, the first sound inlet hole and the second sound inlet hole each are located at a position close to the top of the terminal device.

This embodiment further provides a terminal device, including a housing, a display screen disposed opposite to the housing, and a microphone located in the terminal device. The microphone includes a microphone housing, a microphone circuit board, and a micro-electro-mechanical system chip. The microphone housing is disposed on the microphone circuit board, and forms a microphone chamber with the microphone circuit board. The micro-electro-mechanical system chip is disposed on the microphone circuit board and is located in the microphone chamber. The micro-electro-mechanical system chip has a diaphragm, and one side of the diaphragm is disposed opposite to the microphone circuit board. Apart that is of the micro-electro-mechanical system chip and that is located on the one side of the diaphragm and the microphone circuit board form a chip chamber. A first sound inlet hole is disposed on the back of the housing, and a second sound inlet hole is disposed on the front of the display screen.

The chip chamber is connected, through the second sound inlet hole, to the outside of a side on which the front of the display screen is located, and the microphone chamber is connected, through the first sound inlet hole, to the outside of a side on which the back of the housing is located, so that a sound wave from the side on which the front of the display screen is located passes through the second sound inlet hole and acts on the one side of the diaphragm, and a sound wave from the side on which the back of the housing is located passes through the first sound inlet hole and acts on the other side of the diaphragm, where the one side of the diaphragm is disposed opposite to the other side of the diaphragm.

The terminal device further includes a damping piece. The damping piece is located on a path on which a sound wave passes through the first sound inlet hole and acts on the other side of the diaphragm, so that the sound wave entering from the first sound inlet hole passes through the damping piece and acts on the other side of the diaphragm.

In the solutions in this application, when the foregoing structure is used, a sound wave from a side on which the front of the terminal device is located passes through the second sound inlet hole and acts on the one side of the diaphragm, and a sound wave from a side on which the back of the terminal device is located passes through the first sound inlet hole and acts on the other side of the diaphragm. In addition, the damping piece can change an amplitude value and a phase that are of a sound pressure acting on the other side of the diaphragm. Therefore, the damping piece with an appropriate damping factor may be disposed to implement better microphone directivity, thereby improving a directional sound pickup (that is, picking up a sound that is from a direction directly facing the front of the terminal device) effect or a bidirectional sound pickup (that is, picking up sounds that are from directions directly facing the front and back of the terminal device) effect of the terminal device. In addition, to implement the directional sound pickup effect or the bidirectional sound pickup effect, only a single microphone needs to be used, and therefore comparatively small space is occupied and use costs are comparatively low.

In some embodiments, the damping piece is located outside the microphone on the path on which the sound wave passes through the first sound inlet hole and acts on the other side of the diaphragm.

In the solutions in this application, the damping piece is disposed outside the microphone. Therefore, when the terminal device is assembled, the microphone may be mounted to a terminal circuit board to form an integral structure, and then the damping piece is mounted. In this case, when a surface-mount process including high-temperature processing and reheating is performed for assembly of the microphone and mounting of the microphone to the terminal circuit board, the damping piece does not need to undergo high-temperature processing with the microphone, thereby improving use reliability of the damping piece.

In some embodiments, the terminal device further includes another damping piece. The another damping piece is located on a path on which a sound wave passes through the second sound inlet hole and acts on the one side of the diaphragm, so that the sound wave entering from the second sound inlet hole passes through the another damping piece and acts on the one side of the diaphragm.

In the solutions in this application, the another damping piece is disposed on the path on which a sound wave from the side on which the front of the terminal device is located passes through the second sound inlet hole and acts on the one side of the diaphragm. The another damping piece can change an amplitude value and a phase that are of a sound pressure acting on the one side of the diaphragm. Therefore, the damping piece with an appropriate damping factor and the another damping piece with an appropriate damping factor may be disposed to implement better microphone directivity, thereby improving the directional sound pickup effect or the bidirectional sound pickup effect of the terminal device. In addition, the microphone can be adjusted to be a required cardioid directional microphone or a bidirectional microphone by adjusting the damping factors of the two damping pieces, thereby featuring higher flexibility in adjustment.

In some embodiments, the another damping piece is located outside the microphone on the path on which the sound wave passes through the second sound inlet hole and acts on the one side of the diaphragm.

In the solutions in this application, the another damping piece is disposed outside the microphone. Therefore, when the terminal device is assembled, the microphone may be mounted to the terminal circuit board to form an integral structure, and then the another damping piece is mounted. In this case, when the surface-mount process including high-temperature processing and reheating is performed for assembly of the microphone and mounting of the microphone to the terminal circuit board, the another damping piece does not need to undergo high-temperature processing with the microphone, thereby improving use reliability of the another damping piece.

In some possible embodiments, a connection line between a center point of one end that is of the second sound inlet hole and that is connected to the outside of the terminal device and a center point of one end that is of the first sound inlet hole and that is connected to the outside of the terminal device is parallel to a thickness direction of the terminal device or forms an included angle with the thickness direction of the terminal device, where the included angle is less than 30°. In this way, a maximum sensitivity direction in a polar circle formed by the microphone is parallel or roughly parallel to a direction directly facing the front of the terminal device, to ensure that a 0° direction in the polar circle does not deviate from the direction directly facing the front of the terminal device, or a deviation angle is comparatively small.

In some possible embodiments, the terminal device further includes the terminal circuit board. The terminal circuit board is disposed inside the housing and opposite to the display screen, and the microphone circuit board is disposed on the terminal circuit board.

A first sound pickup hole connected to the chip chamber is disposed on the side that is of the microphone circuit board and that directly faces the diaphragm, and the first sound pickup hole is connected to the second sound inlet hole, so that the sound wave from the side on which the front of the terminal device is located passes through the second sound inlet hole and the first sound pickup hole sequentially, enters the chip chamber, and acts on the one side of the diaphragm.

A second sound pickup hole connected to the microphone chamber is disposed on the microphone circuit board or the microphone housing, and the second sound pickup hole is connected to the first sound inlet hole, so that the sound wave from the side on which the back of the terminal device is located passes through the first sound inlet hole and the second sound pickup hole sequentially, enters the microphone chamber, and acts on the other side of the diaphragm.

### BRIEF DESCRIPTION OF DRAWINGS

To describe the technical solutions in the specific implementations of this application or in the prior art more clearly, the following briefly describes the accompanying drawings for describing the specific implementations or the prior art. It is clear that the accompanying drawings in the following descriptions show some implementations of this application, and a person of ordinary skill in the art may derive other drawings from these accompanying drawings without creative efforts.
FIG. 1 is a schematic structural diagram of a terminal device according to an embodiment of this application;
FIG. 2 is a schematic diagram of a partial structure of a terminal device according to an embodiment of this application;
FIG. 3 is a schematic structural diagram of a microphone of a terminal device according to an embodiment of this application;
FIG. 4 is a frequency response simulation curve diagram of a microphone of a terminal device for sound waves from a 0° direction and a 180° direction according to an embodiment of this application;
FIG. 5 is a frequency response curve diagram of a microphone of a terminal device for differences between strengths of signals obtained in a 0° direction and a 180° direction according to an embodiment of this application;
FIG. 6 is a polar coordinate diagram of an omnidirectivity characteristic of a microphone;
FIG. 7 is a polar coordinate diagram of a cardioid directivity characteristic of a microphone;
FIG. 8 is a polar coordinate diagram of a hypercardioid directivity characteristic of a microphone; and
FIG. 9 is a polar coordinate diagram of a bidirectivity characteristic of a microphone.

Reference numerals:
100: a terminal device;
200: a housing; 210: a baseboard; 220: a side wall; 230: the front; 240: the back; 250: a first sound inlet hole; 260; a groove; 270: a foam;
300: a display screen; 310: the front; 320: the back; 330: a second sound inlet hole;
400: a terminal circuit board; 410: a through hole;
500: a support; 520: a connecting channel; 522: a first connecting section; 524: a second connecting section;
600: an accommodation chamber;
700: a microphone; 710: a microphone circuit board; 720: a microphone housing; 730: a micro-electro-mechanical system chip; 731: a diaphragm; 732: one side; 733: the other side; 734: a back plate; 735: a through hole; 736: a chip chamber; 740: a functional integrated circuit chip; 750: a microphone chamber; 760: a first sound pickup hole; 770: a second sound pickup hole;
800: a first damping piece;
900: a second damping piece;
T: a thickness direction of the terminal device;
L: a connecting line;
α: an included angle; and
d: a distance between a center point of one end of the first sound inlet hole and a projection of a center point of one end of the second sound inlet hole on the back of the housing in the thickness direction of the terminal device.

### DESCRIPTION OF EMBODIMENTS

The following describes implementations of this application by using specific embodiments. A person skilled in the art may easily learn of other advantages and effects of this application based on content disclosed in this specification. Although this application is described with reference to an example embodiment, it does not mean that a characteristic of this application is limited only to this implementation. On the contrary, a purpose of describing this application with reference to an implementation is to cover another option or modification that may be derived based on claims of this application. To provide an in-depth understanding of this application, the following description includes many specific details. This application may be alternatively implemented without using these details. In addition, to avoid confusion or blurring of a key point of this application, some specific details are omitted in the description. It should be noted that the embodiments of this application and the features in the embodiments may be mutually combined in the case of no conflict.

It should be noted that in this specification, similar reference numerals and letters represent similar items in the following accompanying drawings. Therefore, once an item is defined in an accompanying drawing, the item does not need to be further defined or explained in the followed accompanying drawings.

The following clearly describes the technical solutions of this application with reference to the accompanying drawings. It is clear that the described embodiments are some but not all of the embodiments of this application. All other embodiments obtained by a person of ordinary skill in the art based on the embodiments of this application without creative efforts shall fall within the protection scope of this application.

In the description of this application, it should be noted that a position or a position relationship indicated by a term, for example, "center", "upper", "lower", "left", "right", "vertical", "horizontal", "inside", or "outside" is based on a position or a position relationship shown in the accompanying drawings, is used merely to help describe this application and simplify the description, and does not indicate or imply that an indicated apparatus or an indicated component needs to be in a specific position and needs to be constructed and operated in a specific position. Therefore, it shall not be understood as a limitation on this application. In addition, the terms "first" and "second" are merely intended for a purpose of descriptions, and shall not be understood as an indication or implication of relative importance.

In the descriptions of this application, it should be noted that unless otherwise clearly specified and limited, terms "installation", "connection", and "connection" should be understood in a broad sense. For example, a connection may be a fixed connection, a detachable connection, or an integral connection; may be a mechanical connection or an electrical connection; or may be a direct connection, an indirect connection through an intermediate medium, or an internal connection of two components. A person of ordinary skill in the art may consider a specific case when understanding specific meanings of the terms in this application.

To make the objectives, technical solutions, and advantages of this application clearer, the following further describes the implementations of this application in detail with reference to the accompanying drawings.

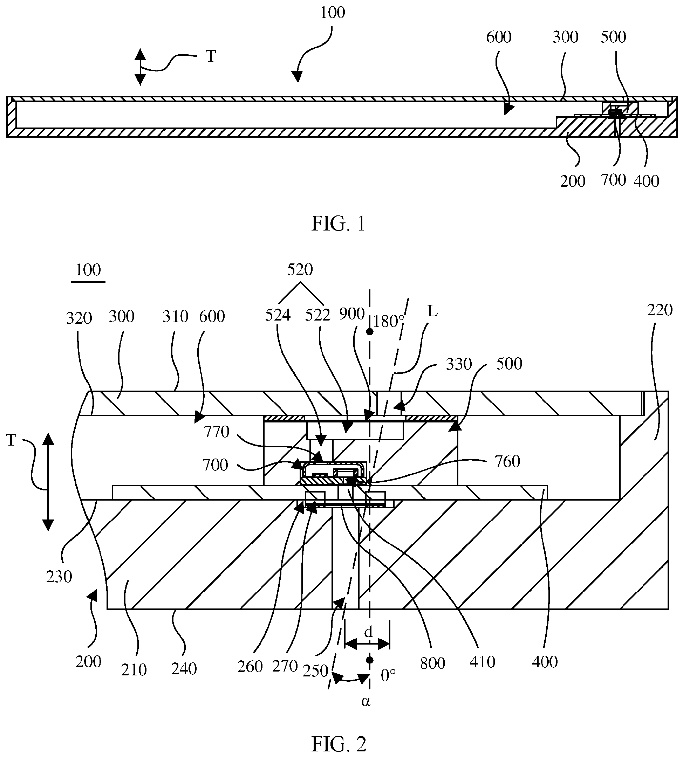

Refer to FIG. 1 and FIG. 2. FIG. 1 and FIG. 2 show a schematic structure of a terminal device 100 with a built-in microphone, and mainly show a schematic structure in which the microphone cooperates with another component of the terminal device 100. A 0°-180° line in FIG. 2 is a straight line on which a 0° direction and a 180° direction in a polarity diagram of the microphone are. As shown in FIG. 1 and FIG. 2, an embodiment of this application provides the terminal device 100. The terminal device 100 includes a housing 200, a display screen 300, a terminal circuit board 400, and the microphone located in the terminal device 100. In this implementation, an example is used for description in which the terminal device 100 is a mobile phone. Certainly, a person skilled in the art may understand that in another alternative implementation, the terminal device 100 may alternatively be another terminal device such as a tablet computer or a smartwatch. This does not limit the protection scope of this application herein.

In this implementation, the housing 200 is a rear housing of the terminal device 100, and includes a baseboard 210 and a side wall 220. The side wall 220 is disposed around the baseboard 210 along an outer periphery of the baseboard 210, and protrudes from the front 230 of the baseboard 210 (that is, a surface located inside the terminal device 100) along a thickness direction T of the terminal device. Certainly, a person skilled in the art may understand that in another alternative implementation, the housing 200 may alternatively be a middle frame of the terminal device 100. This does not limit the protection scope of this application herein.

In this implementation, a shape of the housing 200 is not limited. For example, the housing 200 may be in a shape of a cuboid, and corners of the housing 200 are arc-shaped to some extent.

Further, the display screen 300 is disposed opposite to the housing 200. In this implementation, an outer frame of the display screen 300 is fixed on a top surface of the side wall 220 of the housing 200, the display screen 300 is disposed opposite to the baseboard 210 of the housing 200, and the display screen 300 and the housing 200 form an accommodation chamber 600. Both the terminal circuit board 400 and the microphone are located in the accommodation chamber 600. The display screen 300 is located on the front of the terminal device 100, and the housing 200 is located on the back of the terminal device 100. A person skilled in the art may understand that the front of the terminal device 100 is a side facing a user during normal use, and the back of the terminal device 100 is a side facing away from the user during normal use.

As shown in FIG. 2, the terminal circuit board 400 is disposed inside the housing 200 and opposite to the display screen 300. In this implementation, the terminal circuit board 400 is fixed on an inner surface of the baseboard 210 of the housing 200, and is disposed opposite to the back 320 of the display screen 300. The terminal circuit board 400 is a mainboard of the terminal device 100, bears electronic parts and components included in the terminal device 100, and can implement electrical interconnection between the electronic parts and components.

Further, the microphone is fixed on a side that is of the terminal circuit board 400 and that faces the display screen 300 (that is, an upper surface in FIG. 2; and in other words, the side is a side that is of the terminal circuit board 400 and that faces away from the baseboard 210 of the housing 200). The microphone is configured to convert a collected audio signal into an electrical signal. In this implementation, the microphone uses a MEMS (micro-electro-mechanical system) microphone.

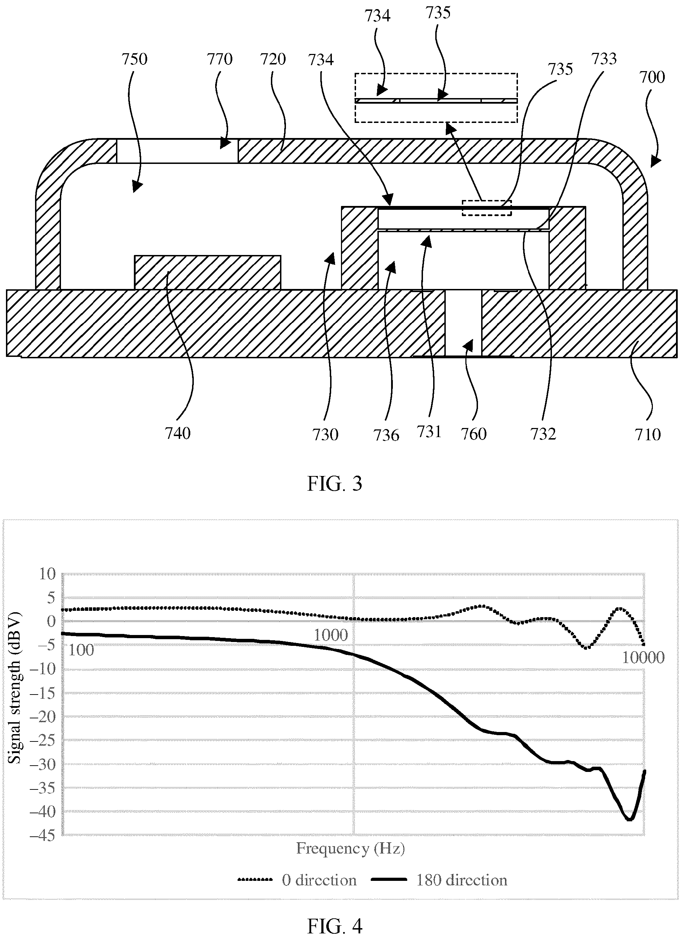

The following specifically describes a structure of the microphone used in this embodiment with reference to FIG. 3.

As shown in FIG. 3, the microphone includes a microphone circuit board 710, a microphone housing 720, a micro-electro-mechanical system chip 730 (that is, a MEMS chip), and a functional integrated circuit chip 740 (that is, an ASIC chip). The microphone housing 720 is disposed on the microphone circuit board 710, and forms a microphone chamber 750 with the microphone circuit board 710. The micro-electro-mechanical system chip 730 and the functional integrated circuit chip 740 are disposed apart on the microphone circuit board 710, and are both located in the microphone chamber 750. The microphone circuit board 710 is disposed on the side that is of the terminal circuit board 400 and that faces away from the baseboard 210 of the housing 200, and is electrically connected to the terminal circuit board 400 (refer to FIG. 2).

The micro-electro-mechanical system chip 730 includes a diaphragm 731 and a back plate 734, which are disposed oppositely and apart. A working principle of the micro-electro-mechanical system chip 730 is as follows: using a pressure gradient resulting from a sound change to cause the diaphragm 731 to be deformed due to sound pressure interference, further to change a value of capacitance between the diaphragm 731 and the back plate 734. A change in the value of the capacitance is converted into an output change in a voltage value by a capacitance-voltage conversion circuit. Then, an amplification circuit amplifies an obtained voltage and outputs an amplified voltage. In this way, a sound pressure signal is converted into a voltage signal.

Specifically, a part that is of the micro-electro-mechanical system chip and that is located on one side 732 of the diaphragm 731 and the microphone circuit board 710 form a chip chamber 736. In this implementation, the back plate 734 is located on the other side 733 of the diaphragm 731, and the other side 733 is disposed opposite to the one side 732. A plurality of through holes 735 are disposed in the back plate 734. The plurality of through holes 735 enable space formed between the other side 733 of the diaphragm 731 and the back plate 734 to be connected to the microphone chamber 750 outside the micro-electro-mechanical system chip 730.

A person skilled in the art may understand that in another alternative implementation, the back plate 734 may be alternatively located on a side that is of the diaphragm 731 and that faces the microphone circuit board 710, and located between the microphone circuit board 710 and the diaphragm 731. The back plate 734 divides the chip chamber 736 between the microphone circuit board 710 and the diaphragm 731 into a first chip chamber part (not shown in the figure) and a second chip chamber part (not shown in the figure). The first chip chamber part is located between the microphone circuit board 710 and the back plate 734, and the second chip chamber part is located between the back plate 734 and the diaphragm 731. A plurality of through holes 735 are disposed in the back plate 734. The plurality of through holes 735 enable the first chip chamber part to be connected to the second chip chamber part. This does not limit the protection scope of this application herein.

Further, the functional integrated circuit chip 740 is electrically connected to the micro-electro-mechanical system chip 730. In this implementation, a connection manner known in the conventional technology may be used as a manner in which the two are electrically connected, and a functional integrated circuit chip 740 known in the conventional technology may also be used as the functional integrated circuit chip 740. Details are not described herein.

As shown in FIG. 3, a first sound pickup hole 760 connected to the chip chamber 736 is disposed on a side that is of the microphone circuit board 710 and that directly faces the diaphragm 731, and a second sound pickup hole 770 connected to the microphone chamber 750 is disposed on the microphone housing 720, so that a sound wave passing through the first sound pickup hole 760 enters the chip chamber 736 and acts on the one side 732 of the diaphragm 731, and a sound wave passing through the second sound pickup hole 770 enters the microphone chamber 750, passes through the through holes 735 in the back plate 734, and acts on the other side 733 of the diaphragm 731.

Further, the second sound pickup hole 770 is disposed on a top wall that is of the microphone housing 720 and that is disposed opposite to the microphone circuit board 710, and the second sound pickup hole 770 and the micro-electro-mechanical system chip 730 are disposed in a staggered manner. In other words, a projection of the second sound pickup hole 770 on the microphone circuit board 710 along the thickness direction T of the terminal device does not overlap the micro-electro-mechanical system chip 730. That the second sound pickup hole 770 and the micro-electro-mechanical system chip 730 are disposed in a staggered manner can prevent impurities such as dust passing through the second sound pickup hole 770 from directly flowing to the micro-electro-mechanical system chip 730.

A person skilled in the art may understand that in another alternative implementation, the second sound pickup hole 770 may be alternatively disposed on a side wall of the microphone housing 720, or disposed in another part that is of the microphone circuit board 710 and that is not a position in which the micro-electro-mechanical system chip 730 is disposed. This does not limit the protection scope of this application herein.

As shown in FIG. 2 and FIG. 3, a first sound inlet hole 250 is disposed on the back 240 of the housing 200. One end of the first sound inlet hole 250 is connected to the outside of one side of the terminal device 100 (that is, a side on which the back of the terminal device 100 is located), and the other end of the first sound inlet hole 250 is connected to the first sound pickup hole 760, so that the sound wave from the one side of the terminal device 100 passes through the first sound inlet hole 250 and the first sound pickup hole 760 sequentially, enters the chip chamber 736, and acts on the one side 732 of the diaphragm 731. In this implementation, the first sound inlet hole 250 is disposed on the back 240 of the baseboard 210 of the housing 200.

A second sound inlet hole 330 is disposed on the front 310 of the display screen 300. One end of the second sound inlet hole 330 is connected to the outside of the other side of the terminal device 100 (that is, a side on which the front of the terminal device 100 is located), and the other end of the second sound inlet hole 330 is connected to the second sound pickup hole 770, so that the sound wave from the other side of the terminal device 100 passes through the second sound inlet hole 330 and the second sound pickup hole 770 sequentially, enters the microphone chamber 750, and acts on the other side 733 of the diaphragm 731. In this implementation, the first sound inlet hole 250 and the second sound inlet hole 330 each are located at a position close to the top of the terminal device 100.

The terminal device 100 further includes a first damping piece 800 and a second damping piece 900. The first damping piece 800 is located on a path on which a sound wave passes through the first sound inlet hole 250 and acts on the one side 732 of the diaphragm 731, so that the sound wave entering from the first sound inlet hole 250 passes through the first damping piece 800 and acts on the one side 732 of the diaphragm 731. The second damping piece 900 is located on a path on which a sound wave passes through the second sound inlet hole 330 and acts on the other side 733 of the diaphragm 731, so that the sound wave entering from the second sound inlet hole 330 passes through the second damping piece 900 and acts on the other side 733 of the diaphragm 731.

In this implementation, the first sound inlet hole 250 and the second sound inlet hole 330 are disposed on the back and front of the terminal device 100, respectively, and the first sound pickup hole 760 connected to the chip chamber 736 and the second sound pickup hole 770 connected to the microphone chamber 750 are disposed on the microphone, so that the sound wave from the one side of the terminal device 100 passes through the first sound inlet hole 250 and the first sound pickup hole 760 sequentially, enters the chip chamber 736, and acts on the one side 732 of the diaphragm 731 (that is, the side on which the back of the terminal device 100 is located), and the sound wave from the other side of the terminal device 100 passes through the second sound inlet hole 330 and the second sound pickup hole 770 sequentially, enters the microphone chamber 750, and acts on the other side 733 of the diaphragm 731 (that is, the side on which the front of the terminal device 100 is located). In addition, the first damping piece 800 is disposed on the path on which a sound wave from the one side of the terminal device 100 passes through the first sound inlet hole 250 and acts on the one side 732 of the diaphragm 731, and the second damping piece 900 is disposed on the path on which a sound wave from the other side of the terminal device 100 passes through the second sound inlet hole 330 and acts on the other side 733 of the diaphragm 731. The first damping piece 800 can change an amplitude value and a phase that are of a sound pressure acting on the one side 732 of the diaphragm 731, and the second damping piece 900 can change an amplitude value and a phase that are of a sound pressure acting on the other side 733 of the diaphragm 731. Therefore, the first damping piece 800 with an appropriate damping factor and the second damping piece 900 with an appropriate damping factor may be disposed to implement better microphone directivity, thereby improving a directional sound pickup effect or a bidirectional sound pickup effect of the terminal device 100.

In addition, cardioid directivity or figure-8 directivity can be implemented by adjusting the damping factors of the first damping piece 800 and the second damping piece 900, and flexibility in adjustment is comparatively high. When no damping piece is disposed, sound waves from the 0° direction act on the one side 732 of the diaphragm 731 after passing through the first sound inlet hole 250 and the first sound pickup hole 760, and act on the other side 733 of the diaphragm 731 after passing through the second sound inlet hole 330 and the second sound pickup hole 770. In this case, an amplitude value of the sound wave that acts on the one side 732 of the diaphragm 731 is greater than an amplitude value of the sound wave that acts on the other side 733 of the diaphragm 731. Therefore, to implement cardioid directivity, the damping factor of the first damping piece 800 may be set to a comparatively small value, and the damping factor of the second damping piece 900 may be set to a comparatively large value, so that there is a comparatively large sound pressure difference between the amplitude value of the sound wave that acts on the one side 732 of the diaphragm 731 and the amplitude value of the sound wave that acts on the other side 733 of the diaphragm 731. In this way, directional sound pickup can be implemented. In this case, the microphone 700 has highest sensitivity to a sound that is from a direction directly facing the back of the terminal device 100, and can satisfactorily pick up the sound that is from the direction directly facing the back of the terminal device 100, but suppresses sounds that are from directions directly facing the front and sides of the terminal device 100. To implement figure-8 directivity, the damping factor of the first damping piece 800 and the damping factor of the second damping piece 900 may be adjusted, so that the amplitude value of the sound wave that acts on the one side 732 of the diaphragm 731 is comparatively close to the amplitude value of the sound wave that acts on the other side 733 of the diaphragm 731. In this way, bidirectional sound pickup can be implemented. In this case, the microphone 700 has highest sensitivity to sounds that are from directions directly facing the front and back of the terminal device 100, and can satisfactorily pick up the sounds that are from the directions directly facing the front and back of the terminal device, but suppresses sounds that are from directions directly facing the sides of the terminal device 100.

In addition, when no damping piece is disposed, sound waves from the 180° direction directly act on the one side 732 of the diaphragm 731 after passing through the first sound inlet hole 250 and the first sound pickup hole 760 and entering the chip chamber 736, and directly act on the other side 733 of the diaphragm 731 after passing through the second sound inlet hole 330 and the second sound pickup hole 770 and entering the microphone chamber 750. In this case, an amplitude value of the sound wave that acts on the one side 732 of the diaphragm 731 is greater than an amplitude value of the sound wave that acts on the other side 733 of the diaphragm 731. Based on theoretical analysis, this may be because the sound wave that enters the microphone chamber 750 after passing through the second sound inlet hole 330 and the second sound pickup hole 770 is attenuated due to refraction, diffusion, and the like. As a result, the amplitude value of the sound wave that acts on the other side 733 of the diaphragm 731 after passing through the microphone chamber 750 decreases.

When directivity of the microphone 700 is cardioid directivity, a sound from the direction directly facing the back of the terminal device, that is, a sound from the 0° direction in FIG. 2, can be picked up, because the first sound pickup hole 760 is connected to the first sound inlet hole 250 that is located on the back 240 of the housing 200. Therefore, this case is applicable to a directional sound pickup scenario of the terminal device 100. For example, a sound may be picked up directionally during recording. A sound pickup direction (that is, a maximum sensitivity direction of the microphone, corresponding to the 0° direction in FIG. 2) is consistent with a direction of a center line of a viewing angle of a camera (not shown in the figure). Therefore, interference caused by surrounding ambient noise can be effectively reduced.

When directivity of the microphone 700 is bidirectivity, sounds from the directions directly facing the front and back of the terminal device, that is, sounds from the 0° direction and the 180° direction in FIG. 2, can be simultaneously picked up, because the first sound pickup hole 760 is connected to the first sound inlet hole 250 that is located on the back 240 of the housing 200, and the second sound pickup hole 770 is connected to the second sound inlet hole 330 that is located on the front 310 of the display screen 300. Therefore, this case is applicable to a bidirectional sound pickup scenario of the terminal device 100.

It should be noted that when being transferred to the terminal device 100, external sound waves separately arrive at the first sound inlet hole 250 and the second sound inlet hole 330. A largest difference exists between a distance from a sound wave from the 0° direction to the first sound inlet hole 250 (or the second sound inlet hole 330) and a distance from a sound wave from the 180° direction to the first sound inlet hole 250 (or the second sound inlet hole 330). Sound waves from a 90° direction and a 270° direction simultaneously arrive at the first sound inlet hole 250 (or the second sound inlet hole 330).

A person skilled in the art may understand that in another alternative implementation, the second sound inlet hole 330 may be connected to the first sound pickup hole 760, so that a sound wave from the other side of the terminal device 100 (that is, the side on which the front of the terminal device 100 is located) passes through the second sound inlet hole 330 and the first sound pickup hole 760 sequentially, enters the chip chamber 736, and acts on the one side 732 of the diaphragm 731. In this case, the first sound inlet hole 250 is connected to the second sound pickup hole 770, so that a sound wave from the one side of the terminal device 100 (that is, the side on which the back of the terminal device 100 is located) passes through the first sound inlet hole 250 and the second sound pickup hole 770 sequentially, enters the microphone chamber 750, and acts on the other side 733 of the diaphragm 731. In this case, the first damping piece 800 is located on a path on which a sound wave passes through the second sound inlet hole 330 and acts on the one side 732 of the diaphragm 731, and the second damping piece 900 is located outside the microphone on a path on which a sound wave passes through the first sound inlet hole 250 and acts on the other side 733 of the diaphragm 731. Cardioid directivity or figure-8 directivity can also be implemented by adjusting the damping factors of the first damping piece 800 and the second damping piece 900.

When this structure is used and when directivity of the microphone 700 is cardioid directivity, a sound from the direction directly facing the front of the terminal device can be picked up, because the first sound pickup hole 760 is connected to the second sound inlet hole 320 that is located on the front 310 of the display screen 300. Therefore, this case is applicable to a directional sound pickup scenario of the terminal device 100. For example, a sound may be picked up directionally when a user is in a video call or WeChat call. A sound pickup direction directly faces a user speaking direction. When the camera is a front-facing camera, a sound from a shooting direction of the camera may be picked up directionally.

When directivity of the microphone 700 is bidirectivity, sounds from the directions directly facing the front and back of the terminal device can be simultaneously picked up, because the first sound pickup hole 760 is connected to the second sound inlet hole 330 that is located on the front 310 of the display screen 300, and the second sound pickup hole 770 is connected to the first sound inlet hole 250 that is located on the back 240 of the housing 200. Therefore, this case is applicable to a bidirectional sound pickup scenario of the terminal device 100.

A person skilled in the art may understand that directivity is a characteristic that sensitivity of a microphone varies according to an incident direction of a sound wave. Directivity of the microphone includes unidirectivity, bidirectivity, and omnidirectivity. The front of a unidirectional microphone has significantly higher sensitivity to a sound wave than another direction. The unidirectional microphone may be subdivided into a cardioid microphone and a hypercardioid microphone based on a shape of a directivity characteristic curve. A bidirectional microphone has higher sensitivity in both front and back directions than in another direction, and is also referred as a figure-8 microphone. An omnidirectional microphone has basically same sensitivity to sound waves from all directions. Sensitivity of a microphone is the microphone's capability of converting a sound pressure to a level.

As shown in FIG. 2, the first damping piece 800 is located outside the microphone on the path on which the sound wave passes through the first sound inlet hole 250 and acts on the one side 732 of the diaphragm 731. The second damping piece 900 is located outside the microphone on the path on which the sound wave passes through the second sound inlet hole 330 and acts on the other side 733 of the diaphragm 731. The first damping piece 800 and the second damping piece 900 are disposed outside the microphone. Therefore, when the terminal device 100 is assembled, the microphone may be mounted to the terminal circuit board 400 to form an integral structure, and then the first damping piece 800 and the second damping piece 900 are mounted. In this case, when a surface-mount process including high-temperature processing and reheating is performed for assembly of the microphone and mounting of the microphone to the terminal circuit board 400, the first damping piece 800 and the second damping piece 900 do not need to undergo high-temperature processing with the microphone, thereby improving use reliability of the first damping piece 800 and the second damping piece 900. In addition, the damping pieces are disposed outside the two sound pickup holes. In this case, the microphone can be adjusted to be a required cardioid directional microphone or a bidirectional microphone by adjusting the damping factors of the two damping pieces, thereby featuring higher flexibility in adjustment.

It should be noted that in another alternative implementation, it may be that no damping piece is disposed on the path on which a sound wave passes through the first sound inlet hole 250 and acts on the one side 732 of the diaphragm 731, and a damping piece is disposed only on the path on which a sound wave passes through the second sound inlet hole 330 and acts on the other side 733 of the diaphragm 731; or it may be that no damping piece is disposed on the path on which a sound wave passes through the second sound inlet hole 330 and acts on the one side 732 of the diaphragm 731, and a damping piece is disposed only on the path on which a sound wave passes through the first sound inlet hole 250 and acts on the other side 733 of the diaphragm 731.

A person skilled in the art may understand that the first damping piece 800 and the second damping piece 900 may use a damping piece structure existing in the conventional technology. For example, the damping piece may be a silicon sheet disposed with dense through holes, where the dense through holes form a through hole matrix. A material of the damping piece may be a material such as silicon, ceramic, a line board, or a metal sheet. The damping piece may alternatively be a silicon sheet disposed with a channel, where the channel can allow a sound wave to pass through and act on the diaphragm 731. One end of the channel may be disposed as a mesh structure, or a through structure, and the other end of the channel may be disposed as a mesh structure, or a through structure. The mesh structure is mainly used to prevent dust from entering the microphone through a sound pickup hole and affecting product performance of the microphone. It may be that a plurality of small through holes are disposed on an end of the channel of the damping piece to form the mesh structure, or may be that an air filter is used as the mesh structure to cover an end of the channel in a manner such as pasting.

As shown in FIG. 2, a through hole 410 completely covering the first sound pickup hole 760 is disposed on a part that is of the terminal circuit board 400 and that directly faces the first sound pickup hole 760. The first sound inlet hole 250 straightly extends to the front 230 (that is, an upper surface in FIG. 2) of the housing 200, and is connected to the first sound pickup hole 760 through the through hole 410. The first damping piece 800 is fixed in the first sound inlet hole 250. In this implementation, a pore size of the through hole 410 is greater than a pore size of the first sound pickup hole 760, and the pore size of the through hole 410 is less than a pore size of the first sound inlet hole 250. The first sound inlet hole 250 runs through the baseboard 210 of the housing 200 in a shape of a straight line in a thickness direction. A person skilled in the art may understand that in an alternative implementation, the first sound inlet hole 250 may alternatively run through the housing 200 in another shape such as a curved shape or a bent shape, or a sound channel may be disposed in a mechanical part of the terminal device 100 to connect the first sound inlet hole 250 and the through hole 410 on the terminal circuit board 400.

Further, an inner wall side of one end that is of the first sound inlet hole 250 and that is connected to the through hole 410 has a groove 260 recessed into the inner wall side, and one end of the groove 260 extends to the front 230 of the housing 200. The first damping piece 800 is located in the groove 260 and completely covers the through hole 410. One side of the first damping piece 800 is fixed on and hermetically connected to the other end of the groove 260, and the other side of the first damping piece 800 is fixed on and hermetically connected to a side that is of the terminal circuit board 400 and that faces away from the microphone. The two sides of the first damping piece 800 are separately fixed between the groove 260 and the terminal circuit board 400 by using an adhesive.

In this implementation, to enable an outer periphery of the side that is of the first damping piece 800 and that faces the terminal circuit board 400 to be hermetically connected to the terminal circuit board 400, elastic foam 270 further needs to be filled between the first damping piece 800 and the terminal circuit board 400. It should be noted that during actual installation, the foam 270 should be in a flattened state. The foam 270 drawn in FIG. 2 is in an original state of the foam 270, to help indicate that the foam 270 exists there.

A person skilled in the art may understand that in another alternative implementation, the first damping piece 800 may be alternatively located in another position on the path on which a sound wave passes through the first sound inlet hole 250 and acts on the one side 732 of the diaphragm 731.

As shown in FIG. 2, the terminal device 100 further includes a support 500. The support 500 is disposed on a side on which the terminal circuit board 400 is disposed opposite to the display screen 300. In other words, the support 500 is disposed between the front of the terminal circuit board 400 and the back 320 of the display screen 300, and is located in the accommodation chamber 600. A connecting channel 520 connecting the second sound inlet hole 330 and the second sound pickup hole 770 is formed in the support 500, so that a sound wave from the other side of the terminal device 100 (that is, the side on which the front of the terminal device 100 is located) passes through the second sound inlet hole 330, the connecting channel 520, and the second sound pickup hole 770 sequentially, enters the microphone chamber 750, and acts on the other side 733 of the diaphragm 731. In this implementation, the support 500 may be a mechanical part (the mechanical part may be a sound pickup pipe) of the terminal device 100, or the support 500 may be additionally disposed in the terminal device 100, provided that the connecting channel 520 connecting the second sound inlet hole 330 and the second sound pickup hole 770 can be formed. This does not limit the protection scope of this application herein.

Specifically, the connecting channel 520 includes a first connecting section 522 and a second connecting section 524. The first connecting section 522 extends in a direction parallel to the front 310 of the display screen 300, and one end of the first connecting section 522 is connected to the second sound inlet hole 330. The second connecting section 524 extends in the thickness direction T of the terminal device, and one end of the second connecting section 524 is connected to the other end of the first connecting section 522, and the other end of the second connecting section 524 is connected to the second sound pickup hole 770. A person skilled in the art may understand that the connecting channel 520 may alternatively use another structural form, and is not limited thereto.

Further, the support 500 covers the microphone housing 720 and is hermetically connected to the microphone housing 720, and a side that is of the support 500 and that faces the display screen 300 is fixed on and hermetically connected to the display screen 300. In this implementation, a side that is of the support 500 and that faces the terminal circuit board 400 is also fixed on the terminal circuit board 400. A person skilled in the art may understand that in another alternative implementation, the support 500 may be fixed only on the terminal circuit board 400, or may be fixed only on the display screen 300.

To enable the support 500 to be hermetically connected to the microphone, elastic sealing foam (not shown in the figure) is filled between the microphone and the support 500. The support 500 is hermetically connected between the back 320 of the display screen 300 and the microphone housing 720. Therefore, the connecting channel 520 is a sealed channel extending from the second sound inlet hole 330 to the second sound pickup hole 770.

Further, the second damping piece 900 is located in the connecting channel 520, one side of the second damping piece 900 is fixed on and hermetically connected to the back 320 of the display screen 300, and the second damping piece 900 completely covers the second sound inlet hole 330. A person skilled in the art may understand that in another alternative implementation, the second damping piece 900 may be alternatively located in another position on the path on which a sound wave passes through the second sound inlet hole 330 and acts on the other side 733 of the diaphragm 731.

A person skilled in the art may understand that in another alternative implementation, the connecting channel 520 may be alternatively formed by using a sound guide tube (not shown in the figure). One end of the sound guide tube may be connected to the microphone and connected to the second sound pickup hole 770, and the other end of the sound guide tube may extend outwards to be inserted into the second sound inlet hole 330, to form a sealed channel from the second sound inlet hole 330 to the second sound pickup hole 770. The sound guide tube may be a flexible tube, for example, a polyester PET heat shrinkable tube or a PVC heat shrinkable tube. A cross section of the sound guide tube may be square or circular or in another shape. The sound guide tube may be alternatively made of a hard material, for example, copper, iron, or aluminum.

In this implementation, the camera (not shown in the figure) of the terminal device 100 is disposed to perform shooting, where in this case, the housing 200 faces an object. The camera is a rear-facing camera. A line L connecting a center point of one end that is of the second sound inlet hole 330 and that is connected to the outside of the terminal device 100 and a center point of one end that is of the first sound inlet hole 250 and that is connected to the outside of the terminal device 100 forms an included angle α with a center line of a viewing angle of the camera, where the included angle α is less than 30°. In this way, a maximum sensitivity direction in a polar circle formed by the microphone is parallel or roughly parallel to a direction of the camera, to ensure that a 0° direction in the polar circle does not deviate from the direction of the camera, or a deviation angle is comparatively small. A person skilled in the art may understand that the center line of the viewing angle of the camera is parallel to the thickness direction T of the terminal device.

Further, a distance d between the center point of the one end of the first sound inlet hole 250 and a projection of the center point of the one end of the second sound inlet hole 330 on the back 240 of the housing 200 in the thickness direction T of the terminal device is less than or equal to 10 mm.

A person skilled in the art may understand that in another alternative implementation, the line L connecting the center point of the one end that is of the second sound inlet hole 330 and that is connected to the outside of the terminal device 100 and the center point of the one end that is of the first sound inlet hole 250 and that is connected to the outside of the terminal device 100 may alternatively be parallel to the center line that is of the viewing angle of the camera and that is in a same direction as the maximum sensitivity direction of the microphone.

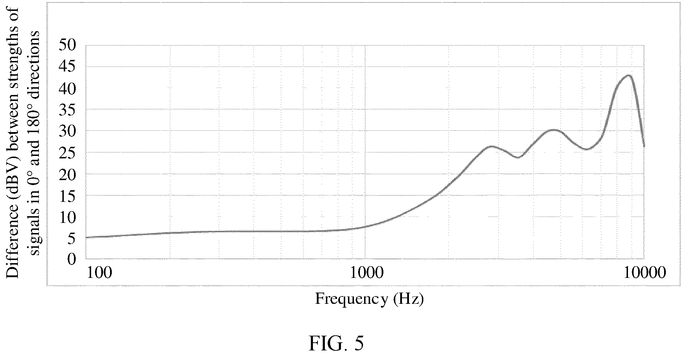

The following describes a directivity effect of the microphone of the terminal device 100 with reference to FIG. 4 and FIG. 5.

FIG. 4 is a frequency response simulation curve diagram of the microphone (corresponding to the microphones in the terminal devices 100 in FIG. 1 and FIG. 2) of the terminal device 100 for sound waves from a 0° direction and a 180° direction according to an embodiment of this application. FIG. 5 is a frequency response curve diagram of the microphone (corresponding to the microphones in the terminal devices 100 in FIG. 1 and FIG. 2) of the terminal device 100 for differences between strengths of signals obtained in a 0° direction and a 180° direction according to an embodiment of this application. A frequency response of a microphone is a ratio of an open-circuit output voltage of a sound wave signal at each frequency to an open-circuit output voltage of the microphone at a specified frequency when the microphone is under actions of a constant sound pressure and a sound wave at a specified angle of incidence, and is expressed in dB. dB = 20 log(V1/V2) = 20 logV, where V1 represents an open-circuit output voltage of a sound wave signal at each frequency, and V2 represents the open-circuit output voltage of the microphone at the specified frequency. The specified frequency is 1000 Hz. For example, if V1 is twice V2, that is, 2 V, 6 dB is obtained. (P represents power, and V represents voltage). dBV uses a reference standard that 1 V is 0 dB, that is, 1 V corresponds to 0 dBV.

In FIG. 4, a horizontal coordinate represents a frequency in a unit of Hz, and a vertical coordinate represents a strength, expressed in dBV, of a signal picked up by the microphone.

A dashed line in FIG. 4 represents a frequency response curve obtained after sound waves from the 0° direction enter the microphone. In this case, the sound waves from the 0° direction separately pass through the first sound inlet hole 250 and the first sound pickup hole 760, and act on the one side 732 of the diaphragm 731; and pass through the second sound inlet hole 330 and the second sound pickup hole 770, and act on the other side 733 of the diaphragm 731. When a sound pressure is constant, a strength of a signal picked up by the microphone for the sound wave at each frequency is measured. When the frequency is 1000 Hz, V1 = V2, that is V = 1, corresponding to 0 dBV All other points on the curve use this point as a reference.

A solid line in FIG. 4 represents a frequency response curve obtained after sound waves from the 180° direction enter the microphone. In this case, the sound waves from the 180° direction separately pass through the first sound inlet hole and the first sound pickup hole 760, and act on the one side 732 of the diaphragm 731; and pass through the second sound inlet hole 330 and the second sound pickup hole 770, and act on the other side 733 of the diaphragm 731. When a sound pressure is constant, a strength of a signal picked up by the microphone for the sound wave at each frequency is measured.

In FIG. 5, a horizontal coordinate represents a frequency in a unit of Hz, and a vertical coordinate represents a difference, also expressed in dBV, between strengths of signals picked up by the microphone in the 0° and 180° directions.

The curve diagrams shown in FIG. 4 and FIG. 5 are frequency response curves of the microphones in the terminal devices 100 shown in FIG. 1 and FIG. 2, where the curves are obtained through testing by using COMSOL multiphysics (multiphysics simulation software).

Simulation conditions under which the curve diagrams shown in FIG. 4 and FIG. 5 are obtained are shown in Table 1 below.

**Table 1**

| Parameter | Value |
|---|---|
| Damping factor of a first damping piece | 32 |
| Damping factor of a second damping piece | 600 |
| Distance d (mm) between a center point of one end of a first sound inlet hole and a projection of a center point of one end of a second sound inlet hole on the back of a housing in a thickness direction of a terminal device | 1.8 mm |
| Included angle α formed between a connecting line and a center line of a viewing angle of a camera | 11.34° |
| Pore size of the first sound inlet hole (mm) | 1.1 mm |
| Pore size of the second sound inlet hole (mm) | 1.0 mm |
| Pore size of a first sound pickup hole (mm) | 0.25 mm |
| Pore size of a second sound pickup hole (mm) | 0.25 mm |
| Distance (mm) between an axis of the first sound pickup hole and an axis of the second sound pickup hole | 1.8 mm |
| Constant sound pressure | 94 dBSPL |
| Sound wave frequency range | 100 Hz to 10000 Hz |

It can be learned from FIG. 4 and FIG. 5 that when sound wave frequencies are between 100 Hz and 10 kHz, after sound waves with a same sound pressure separately arrive at the microphone from the 0° direction and the 180° direction, strengths of signals picked up by the microphone are different, that is, loudness of sounds output by the microphone is different. In other words, although the sound pressure of the sound wave from the 180° direction is the same as the sound pressure of the sound wave from the 0° direction, after the sound wave from the 180° direction arrives at the microphone, the strength of the signal picked up by the microphone is smaller, that is, the sound output by the microphone is smaller. Therefore, it is a direction-selective sound pickup effect. In this case, the microphone is a cardioid directional microphone. In this case, the microphone 700 has highest sensitivity to a sound that is from a direction directly facing the back of the terminal device 100, and can satisfactorily pick up the sound that is from the direction directly facing the back of the terminal device 100, but suppresses sounds that are from directions directly facing the front and sides of the terminal device 100. A range between 100 Hz and 10 kHz is a main frequency range of sounds in daily life.

When sound wave frequencies are between 100 Hz and 1 kHz, after sound waves from the 0° direction and the 180° direction arrive at the microphone, all strengths of signals picked up by the microphone are comparatively stable, and differences between the signal strengths of the two are also comparatively stable, about 6 dB. In this case, directivity is comparatively stable.

When sound wave frequencies are between 1 kHz and 10 kHz, after sound waves from the 0° direction arrive at the microphone, strengths of signals picked up by the microphone are amplified or attenuated with a comparatively small amplitude; and after sound waves from the 180° direction arrive at the microphone, strengths of signals picked up by the microphone are amplified or attenuated with a comparatively large amplitude. In addition, after the sound waves from the 0° direction and the 180° direction arrive at the microphone, differences between the signal strengths change greatly. In this case, directivity is obvious.

## Claims

1. A terminal device (100), comprising: a housing (200), a display screen (300) disposed opposite to the housing (200), and a microphone (700) located in the terminal device (100), wherein the microphone (700) comprises a microphone housing (720), a microphone circuit board (710), and a micro-electro-mechanical system chip (730); the microphone housing (720) is disposed on the microphone circuit board (710), and forms a microphone chamber (750) with the microphone circuit board (710); the micro-electro-mechanical system chip (730) is disposed on the microphone circuit board (710) and is located in the microphone chamber (750); the micro-electro-mechanical system chip (730) has a diaphragm (731), and one side of the diaphragm (731) is disposed opposite to the microphone circuit board (710); a part that is of the micro-electro-mechanical system chip (730) and that is located on the one side of the diaphragm (731) and the microphone circuit board (710) form a chip chamber (736); and a first sound inlet hole (250) is disposed on the back (240) of the housing (200), and a second sound inlet hole (330) is disposed on the front of the display screen (300);
the chip chamber (740) is connected to the outside of the back (240) of the housing (200) through the first sound inlet hole (250), and the microphone chamber (750) is connected to the outside of the front of the display screen (300) through the second sound inlet hole (330), so that a sound wave from the back (240) of the housing (200) passes through the first sound inlet hole (250), enters the chip chamber (736), and acts on the one side of the diaphragm (731), and a sound wave from the front of the display screen (300) passes through the second sound inlet hole (330), enters the microphone chamber (750), and acts on the other side of the diaphragm (731), wherein the one side of the diaphragm (731) is disposed opposite to the other side of the diaphragm (731); and
the terminal device (100) further comprises a damping piece (800), wherein the damping piece (800) is located on a path on which a sound wave passes through the second sound inlet hole and acts on the other side of the diaphragm (731), so that the sound wave entering from the second sound inlet hole (330) passes through the damping piece (800) and acts on the other side of the diaphragm (731),
wherein the terminal device (100) further comprises a terminal circuit board (400), the terminal circuit board (400) is disposed inside the housing (200) and opposite to the display screen (300), and the microphone circuit board (710) is disposed on the terminal circuit board (400);
a first sound pickup hole (760) connected to the chip chamber (736) is disposed on a side that is of the microphone circuit board (710) and that directly faces the diaphragm (731), and the first sound pickup hole (760) is connected to the first sound inlet hole (250), so that the sound wave from the back of the housing (200) passes through the first sound inlet hole (250) and the first sound pickup hole (760) sequentially, enters the chip chamber (736), and acts on the one side of the diaphragm (731); and
a second sound pickup hole (770) connected to the microphone chamber (750) is disposed on the microphone circuit board (710) or the microphone housing (720), and the second sound pickup hole (770) is connected to the second sound inlet hole (330), so that the sound wave from the front of the display screen (300) passes through the second sound inlet hole and (330) the second sound pickup hole (770) sequentially, enters the microphone chamber (750), and acts on the other side of the diaphragm (731),
wherein the terminal device (100) further comprises a support (500), and the support (500) is disposed on a side on which the terminal circuit board (400) is disposed opposite to the display screen (300); and
a connecting channel (520) connecting the second sound inlet hole (330) and the second sound pickup hole (770) is formed in the support (500), so that the sound wave from the front of the display screen (300) passes through the second sound inlet hole (330), the connecting channel (520), and the second sound pickup hole (770) sequentially, enters the microphone chamber (750), and acts on the other side of the diaphragm (731), and wherein an elastic sealing foam is filled between the microphone (700) and the support (500).

2. The terminal device (100) according to claim 1, wherein the damping piece (800) is located outside the microphone (700) on the path on which the sound wave passes through the second sound inlet hole (330) and acts on the other side of the diaphragm (731).

3. The terminal device (100) according to claim 1 or 2, wherein the terminal device (100) further comprises another damping piece (900), and the another damping piece (900) is located on a path on which a sound wave passes through the first sound inlet hole (250) and acts on the one side of the diaphragm (731), so that the sound wave entering from the first sound inlet hole (250) passes through the another damping piece (900) and acts on the one side of the diaphragm (731).

4. The terminal device (100) according to claim 3, wherein the another damping piece (900) is located outside the microphone (700) on the path on which the sound wave passes through the first sound inlet hole (250) and acts on the one side of the diaphragm (731).

5. The terminal device (100) according to any one of claims 1 to 4, wherein the terminal device (100) further comprises a camera, wherein the housing (200) faces an object when the camera performs shooting; and a connection line between a center point of one end that is of the second sound inlet hole (330) and that is connected to the outside of the terminal device (100) and a center point of one end that is of the first sound inlet hole (250) and that is connected to the outside of the terminal device (100) is parallel to a center line of a viewing angle of the camera or forms an included angle with the center line of the viewing angle of the camera, wherein the included angle is less than 30°.

6. The terminal device (100) according to claim 1, wherein the second sound pickup hole (770) is disposed on a top wall that is of the microphone housing (720) and that is disposed opposite to the microphone circuit board (710), and does not overlap the micro-electro-mechanical system chip (730); and
the connecting channel (520) comprises a first connecting section (522) and a second connecting section (524); the first connecting section (522) extends in a direction parallel to the front of the display screen (300), and one end of the first connecting section (522) is connected to the second sound inlet hole (770); and the second connecting section (524) extends in a thickness direction of the terminal device (100), one end of the second connecting section (524) is connected to the other end of the first connecting section (522), and the other end of the second connecting section (524) is connected to the second sound pickup hole (770).

7. The terminal device (100) according to claim 6, wherein the support covers the microphone housing (720) and is hermetically connected to the microphone housing (720), and a side that is of the support (500) and that faces the display screen (300) is fixed on and hermetically connected to the display screen (300).

8. The terminal device (100) according to any one of claims 1 to 7, wherein the damping piece is located in the connecting channel (520), one side of the damping piece is fixed on and hermetically connected to the back of the display screen (300), and the damping piece completely covers the second sound inlet hole (330).

9. The terminal device (100) according to any one of claims 6 to 8, wherein a through hole (410) completely covering the first sound pickup hole (760) is disposed on a part that is of the terminal circuit board (400) and that directly faces the first sound pickup hole (760); and the first sound inlet hole (250) straightly extends to the front of the housing (200), and is connected to the first sound pickup hole (770) through the through hole (410).

10. The terminal device (100) according to claim 9, wherein an inner wall side of one end that is of the first sound inlet hole (250) and that is connected to the through hole has (410) a groove (260) recessed into the inner wall side, and one end of the groove (260) extends to the front of the housing (200); and
when the another damping piece (900) is disposed on the path on which the sound wave passes through the first sound inlet hole (250) and acts on the one side of the diaphragm (731), the another damping piece (900) is located in the groove (260) and completely covers the through hole (410); and one side of the another damping piece (900) is fixed on and hermetically connected to the other end of the groove (260), and the other side of the another damping piece (900) is fixed on and hermetically connected to a side that is of the terminal circuit board (400) and that faces away from the microphone (700).

11. The terminal device according to any one of claims 1 to 10, wherein the first sound inlet hole (250) and the second sound inlet hole (330) each are located at a position close to the top of the terminal device (100).

## Patentansprüche

1. Endgerät (100), umfassend: ein Gehäuse (200), einen Anzeigebildschirm (300), der sich gegenüber dem Gehäuse (200) befindet, und ein Mikrofon (700), das sich in dem Endgerät (100) befindet, wobei das Mikrofon (700) ein Mikrofongehäuse (720), eine Mikrofonplatine (710) und einen mikroelektromechanischen Systemchip (730) umfasst; das Mikrofongehäuse (720) auf der Mikrofonplatine (710) angeordnet ist und mit der Mikrofonplatine (710) eine Mikrofonkammer (750) bildet; der mikroelektromechanische Systemchip (730) auf der Mikrofonplatine (710) angeordnet ist und sich in der Mikrofonkammer (750) befindet;
der mikroelektromechanische Systemchip (730) eine Membran (731) aufweist und eine Seite der Membran (731) gegenüber der Mikrofonleiterplatte (710) angeordnet ist; ein Teil des mikroelektromechanischen Systemchips (730), der sich auf der einen Seite der Membran (731) befindet, und die Mikrofonplatine (710) eine Chipkammer (736) bilden; und eine erste Schalleintrittsöffnung (250) auf der Rückseite (240) des Gehäuses (200) angeordnet ist und eine zweite Schalleintrittsöffnung (330) auf der Vorderseite des Anzeigebildschirms (300) angeordnet ist;
die Chipkammer (740) mit der Außenseite der Rückseite (240) des Gehäuses (200) über die erste Schalleintrittsöffnung (250) verbunden ist und die Mikrofonkammer (750) mit der Außenseite der Vorderseite des Anzeigebildschirms (300) über die zweite Schalleintrittsöffnung (330) verbunden ist, sodass eine Schallwelle von der Rückseite (240) des Gehäuses (200) die erste Schalleintrittsöffnung (250) passiert, in die Chipkammer (736) eintritt und auf die eine Seite der Membran (731) einwirkt und eine Schallwelle von der Vorderseite des Anzeigebildschirms (300) die zweite Schalleintrittsöffnung (330) passiert, in die Mikrofonkammer (750) eintritt und auf die andere Seite der Membran (731) einwirkt, wobei die eine Seite der Membran (731) gegenüber der anderen Seite der Membran (731) angeordnet ist; und
das Endgerät (100) ferner ein Dämpfungsstück (800) umfasst, wobei sich das Dämpfungsstück (800) auf einem Weg befindet, auf dem eine Schallwelle die zweite Schalleintrittsöffnung passiert und auf die andere Seite der Membran (731) einwirkt, sodass die Schallwelle, die aus der zweiten Schalleintrittsöffnung (330) eintritt, das Dämpfungsstück (800) passiert und auf die andere Seite der Membran (731) einwirkt,
wobei das Endgerät (100) ferner eine Endplatine (400) umfasst, die Endplatine (400) in dem Inneren des Gehäuses (200) und gegenüber dem Anzeigebildschirm (300) angeordnet ist und die Mikrofonplatine (710) auf der Endplatine (400) angeordnet ist;
eine erste Schallaufnahmeöffnung (760), die mit der Chipkammer (736) verbunden ist, auf einer Seite der Mikrofonplatine (710) angeordnet ist, die direkt der Membran (731) zugewandt ist, und die erste Schallaufnahmeöffnung (760) mit der ersten Schalleintrittsöffnung (250) verbunden ist, sodass die Schallwelle von der Rückseite des Gehäuses (200) nacheinander die erste Schalleintrittsöffnung (250) und die erste Schallaufnahmeöffnung (760) passiert, in die Chipkammer (736) eintritt und auf die eine Seite der Membran (731) einwirkt; und
eine zweite Schallaufnahmeöffnung (770), die mit der Mikrofonkammer (750) verbunden ist, auf der Mikrofonplatine (710) oder dem Mikrofongehäuse (720) angeordnet ist und die zweite Schallaufnahmeöffnung (770) mit der zweiten Schalleintrittsöffnung (330) verbunden ist, sodass die Schallwelle von der Vorderseite des Anzeigebildschirms (300) nacheinander die zweite Schalleintrittsöffnung (330) und die zweite Schallaufnahmeöffnung (770) passiert, in die Mikrofonkammer (750) eintritt und auf die andere Seite der Membran (731) einwirkt,
wobei das Endgerät (100) ferner einen Träger (500) umfasst und der Träger (500) auf einer Seite angeordnet ist, auf der die Endplatine (400) gegenüber dem Anzeigebildschirm (300) angeordnet ist; und
ein Verbindungskanal (520), der die zweite Schalleintrittsöffnung (330) und die zweite Schallaufnahmeöffnung (770) verbindet, in dem Träger (500) ausgebildet ist, sodass die Schallwelle von der Vorderseite des Anzeigebildschirms (300) nacheinander die zweite Schalleintrittsöffnung (330), den Verbindungskanal (520) und die zweite Schallaufnahmeöffnung (770) passiert, in die Mikrofonkammer (750) eintritt und auf die andere Seite der Membran (731) einwirkt, und wobei ein elastischer Dichtungsschaum zwischen dem Mikrofon (700) und dem Träger (500) eingefüllt ist.

2. Endgerät (100) gemäß Anspruch 1, wobei sich das Dämpfungsstück (800) außerhalb des Mikrofons (700) auf dem Weg befindet, auf dem die Schallwelle die zweite Schalleintrittsöffnung (330) passiert und auf die andere Seite der Membran (731) einwirkt.

3. Endgerät (100) gemäß Anspruch 1 oder 2, wobei das Endgerät (100) ferner ein weiteres Dämpfungsstück (900) umfasst und sich das weitere Dämpfungsstück (900) auf einem Weg befindet, auf dem eine Schallwelle die erste Schalleintrittsöffnung (250) passiert und auf die eine Seite der Membran (731) einwirkt, sodass die Schallwelle, die aus der ersten Schalleintrittsöffnung (250) eintritt, das weitere Dämpfungsstück (900) passiert und auf die eine Seite der Membran (731) einwirkt.

4. Endgerät (100) gemäß Anspruch 3, wobei sich das weitere Dämpfungsstück (900) außerhalb des Mikrofons (700) auf dem Weg befindet, auf dem die Schallwelle die erste Schalleintrittsöffnung (250) passiert und auf die eine Seite der Membran (731) einwirkt.

5. Endgerät (100) gemäß einem der Ansprüche 1 bis 4, wobei das Endgerät (100) ferner eine Kamera umfasst, wobei das Gehäuse (200) einem Objekt zugewandt ist, wenn die Kamera eine Aufnahme durchführt; und eine Verbindungslinie zwischen einem Mittelpunkt eines Endes der zweiten Schalleintrittsöffnung (330), das mit der Außenseite des Endgeräts (100) verbunden ist, und einem Mittelpunkt eines Endes der ersten Schalleintrittsöffnung (250), das mit der Außenseite des Endgeräts (100) verbunden ist, parallel zu einer Mittellinie eines Blickwinkels der Kamera verläuft oder einen eingeschlossenen Winkel mit der Mittellinie des Blickwinkels der Kamera bildet, wobei der eingeschlossene Winkel weniger als 30° beträgt.

6. Endgerät (100) gemäß Anspruch 1, wobei die zweite Schallaufnahmeöffnung (770) an einer oberen Wand des Mikrofongehäuses (720) angeordnet ist, die gegenüber der Mikrofonplatine (710) angeordnet ist und den mikroelektromechanischen Systemchip (730) nicht überlappt; und
der Verbindungskanal (520) einen ersten Verbindungsabschnitt (522) und einen zweiten Verbindungsabschnitt (524) umfasst; sich der erste Verbindungsabschnitt (522) in einer Richtung parallel zu der Vorderseite des Anzeigebildschirms (300) erstreckt und ein Ende des ersten Verbindungsabschnitts (522) mit der zweiten Schalleintrittsöffnung (770) verbunden ist; und sich der zweite Verbindungsabschnitt (524) in einer Richtung der Dicke des Endgeräts (100) erstreckt, wobei ein Ende des zweiten Verbindungsabschnitts (524) mit dem anderen Ende des ersten Verbindungsabschnitts (522) verbunden ist und das andere Ende des zweiten Verbindungsabschnitts (524) mit der zweiten Schallaufnahmeöffnung (770) verbunden ist.

7. Endgerät (100) gemäß Anspruch 6, wobei der Träger das Mikrofongehäuse (720) abdeckt und hermetisch mit dem Mikrofongehäuse (720) verbunden ist und eine Seite des Trägers (500), die dem Anzeigebildschirm (300) zugewandt ist, an dem Anzeigebildschirm (300) befestigt und hermetisch mit diesem verbunden ist.

8. Endgerät (100) gemäß einem der Ansprüche 1 bis 7, wobei sich das Dämpfungsstück in dem Verbindungskanal (520) befindet, eine Seite des Dämpfungsstücks an der Rückseite des Anzeigebildschirms (300) befestigt und hermetisch mit dieser verbunden ist und das Dämpfungsstück die zweite Schalleintrittsöffnung (330) vollständig abdeckt.

9. Endgerät (100) gemäß einem der Ansprüche 6 bis 8, wobei eine Durchgangsöffnung (410), die die erste Schallaufnahmeöffnung (760) vollständig abdeckt, auf einem Teil der Endplatine (400) angeordnet ist, der der ersten Schallaufnahmeöffnung (760) direkt zugewandt ist; und sich die erste Schallaufnahmeöffnung (250) gerade zu der Vorderseite des Gehäuses (200) erstreckt und mit der ersten Schallaufnahmeöffnung (770) über die Durchgangsöffnung (410) verbunden ist.

10. Endgerät (100) gemäß Anspruch 9, wobei eine Innenwandseite eines Endes der ersten Schalleintrittsöffnung (250), die mit der Durchgangsöffnung (410) verbunden ist, eine Nut (260) aufweist, die in die Innenwandseite eingelassen ist, und sich ein Ende der Nut (260) zu der Vorderseite des Gehäuses (200) erstreckt; und,
wenn das weitere Dämpfungsstück (900) auf dem Weg angeordnet ist, auf dem die Schallwelle die erste Schalleintrittsöffnung (250) passiert und auf die eine Seite der Membran (731) einwirkt, sich das weitere Dämpfungsstück (900) in der Nut (260) befindet und die Durchgangsöffnung (410) vollständig abdeckt; und eine Seite des weiteren Dämpfungsstücks (900) an dem anderen Ende der Nut (260) befestigt und hermetisch mit diesem verbunden ist und die andere Seite des weiteren Dämpfungsstücks (900) an einer Seite der Endplatine (400) befestigt und hermetisch mit dieser verbunden ist, die von dem Mikrofon (700) weg weist.

11. Endgerät gemäß einem der Ansprüche 1 bis 10, wobei sich die erste Schalleintrittsöffnung (250) und die zweite Schalleintrittsöffnung (330) jeweils an einer Position nahe der Oberseite des Endgeräts (100) befinden.

## Revendications

1. Dispositif terminal (100), comprenant : un boîtier (200), un écran d'affichage (300) disposé en face du boîtier (200), et un microphone (700) situé dans le dispositif terminal (100), dans lequel le microphone (700) comprend un boîtier de microphone (720), une carte de circuit imprimé de microphone (710), et une puce de système microélectromécanique (730) ; le boîtier de microphone (720) est disposé sur la carte de circuit imprimé de microphone (710), et forme une chambre de microphone (750) avec la carte de circuit imprimé de microphone (710) ; la puce de système microélectromécanique (730) est disposée sur la carte de circuit imprimé de microphone (710) et est située dans la chambre de microphone (750) ; la puce de système microélectromécanique (730) présente un diaphragme (731), et un côté du diaphragme (731) est disposé en face de la carte de circuit imprimé de microphone (710) ; une partie qui est celle de la puce du système microélectromécanique (730) et qui est située sur le côté du diaphragme (731) et la carte de circuit imprimé du microphone (710) forment une chambre de puce (736) ; et un premier trou d'entrée du son (250) est disposé sur l'arrière (240) du boîtier (200), et un second trou d'entrée du son (330) est disposé sur l'avant de l'écran d'affichage (300) ;
la chambre de puce (740) est reliée à l'extérieur de l'arrière (240) du boîtier (200) à travers le premier trou d'entrée du son (250), et la chambre de microphone (750) est reliée à l'extérieur de l'avant de l'écran d'affichage (300) à travers le second trou d'entrée du son (330), de sorte qu'une onde sonore provenant de l'arrière (240) du boîtier (200) traverse le premier trou d'entrée du son (250), pénètre dans la chambre de puce (736), et agit sur le côté du diaphragme (731), et une onde sonore provenant de l'avant de l'écran d'affichage (300) traverse le second trou d'entrée du son (330), pénètre dans la chambre de microphone (750), et agit sur l'autre côté du diaphragme (731), dans lequel le côté du diaphragme (731) est disposé à l'opposé de l'autre côté du diaphragme (731) ; et
le dispositif terminal (100) comprend également une pièce d'amortissement (800), dans lequel la pièce d'amortissement (800) est située sur un trajet sur lequel une onde sonore traverse le second trou d'entrée du son et agit sur l'autre côté du diaphragme (731), de sorte que l'onde sonore entrant par le second trou d'entrée du son (330) traverse la pièce d'amortissement (800) et agit sur l'autre côté du diaphragme (731),
dans lequel le dispositif terminal (100) comprend également une carte de circuit imprimé terminal (400), la carte de circuit imprimé terminal (400) est disposée à l'intérieur du boîtier (200) et en face de l'écran d'affichage (300), et la carte de circuit imprimé de microphone (710) est disposée sur la carte de circuit imprimé terminal (400) ;
un premier trou de prise de son (760) relié à la chambre de puce (736) est disposé sur un côté qui est celui de la carte de circuit imprimé de microphone (710) et qui fait directement face au diaphragme (731), et le premier trou de prise de son (760) est relié au premier trou d'entrée du son (250), de sorte que l'onde sonore provenant de l'arrière du boîtier (200) traverse séquentiellement le premier trou d'entrée du son (250) et le premier trou de prise de son (760), pénètre dans la chambre de puce (736), et agit sur le côté du diaphragme (731) ; et
un second trou de prise de son (770) relié à la chambre de microphone (750) est disposé sur la carte de circuit imprimé de microphone (710) ou le boîtier de microphone (720), et le second trou de prise de son (770) est relié au second trou d'entrée du son (330), de sorte que l'onde sonore provenant de l'avant de l'écran d'affichage (300) traverse séquentiellement le second trou d'entrée du son et (330) le second trou de prise de son (770), pénètre dans la chambre de microphone (750), et agit sur l'autre côté du diaphragme (731),
dans lequel le dispositif terminal (100) comprend également un support (500), et le support (500) est disposé sur un côté sur lequel la carte de circuit imprimé terminal (400) est disposée en face de l'écran d'affichage (300) ; et
un canal de liaison (520) reliant le second trou d'entrée du son (330) et le second trou de prise de son (770) est formé dans le support (500), de sorte que l'onde sonore provenant de l'avant de l'écran d'affichage (300) traverse séquentiellement le second trou d'entrée du son (330), le canal de liaison (520), et le second trou de prise de son (770), pénètre dans la chambre de microphone (750), et agit sur l'autre côté du diaphragme (731), et dans lequel une mousse d'étanchéité élastique est remplie entre le microphone (700) et le support (500).

2. Dispositif terminal (100) selon la revendication 1, dans lequel la pièce d'amortissement (800) est située à l'extérieur du microphone (700) sur le trajet sur lequel l'onde sonore traverse le second trou d'entrée du son (330) et agit sur l'autre côté du diaphragme (731).

3. Dispositif terminal (100) selon la revendication 1 ou 2, dans lequel le dispositif terminal (100) comprend également une autre pièce d'amortissement (900), et l'autre pièce d'amortissement (900) est située sur un trajet sur lequel une onde sonore traverse le premier trou d'entrée du son (250) et agit sur le côté du diaphragme (731), de sorte que l'onde sonore entrant par le premier trou d'entrée du son (250) traverse l'autre pièce d'amortissement (900) et agit sur le côté du diaphragme (731).

4. Dispositif terminal (100) selon la revendication 3, dans lequel l'autre pièce d'amortissement (900) est située à l'extérieur du microphone (700) sur le trajet sur lequel l'onde sonore traverse le premier trou d'entrée du son (250) et agit sur le côté du diaphragme (731).

5. Dispositif terminal (100) selon l'une quelconque des revendications 1 à 4, dans lequel le dispositif terminal (100) comprend également une caméra, dans lequel le boîtier (200) fait face à un objet lorsque la caméra prend des photos ; et une liaison entre un point central d'une extrémité qui est celle du second trou d'entrée du son (330) et qui est reliée à l'extérieur du dispositif terminal (100) et un point central d'une extrémité qui est celle du premier trou d'entrée du son (250) et qui est reliée à l'extérieur du dispositif terminal (100) est parallèle à une ligne centrale d'un angle de vision de la caméra ou forme un angle inclus avec la ligne centrale de l'angle de vision de la caméra, dans lequel l'angle inclus est inférieur à 30°.

6. Dispositif terminal (100) selon la revendication 1, dans lequel le second trou de prise de son (770) est disposé sur une paroi supérieure qui est celle du boîtier de microphone (720) et qui est opposée à la carte de circuit imprimé de microphone (710), sans chevaucher la puce du système microélectromécanique (730) ; et
le canal de liaison (520) comprend une première section de liaison (522) et une seconde section de liaison (524) ; la première section de liaison (522) se prolonge dans une direction parallèle à l'avant de l'écran d'affichage (300), et une extrémité de la première section de liaison (522) est reliée au second trou d'entrée du son (770) ; et la seconde section de liaison (524) se prolonge dans une direction d'épaisseur du dispositif terminal (100), une extrémité de la seconde section de liaison (524) est reliée à l'autre extrémité de la première section de liaison (522), et l'autre extrémité de la seconde section de liaison (524) est reliée au second trou de prise de son (770).

7. Dispositif terminal (100) selon la revendication 6, dans lequel le support recouvre le boîtier de microphone (720) et est relié hermétiquement au boîtier de microphone (720), et un côté qui est celui du support (500) et qui fait face à l'écran d'affichage (300) est fixé sur l'écran d'affichage (300) et relié hermétiquement à celui-ci.

8. Dispositif terminal (100) selon l'une quelconque des revendications 1 à 7, dans lequel la pièce d'amortissement est située dans le canal de liaison (520), un côté de la pièce d'amortissement est fixé à l'arrière de l'écran d'affichage (300) et relié hermétiquement à celui-ci, et la pièce d'amortissement recouvre complètement le second trou d'entrée du son (330).

9. Dispositif terminal (100) selon l'une quelconque des revendications 6 à 8, dans lequel un trou traversant (410) recouvrant entièrement le premier trou de prise de son (760) est disposé sur une partie qui est celle de la carte de circuit imprimé terminal (400) et qui fait directement face au premier trou de prise de son (760) ; et le premier trou d'entrée du son (250) se prolonge directement vers l'avant du boîtier (200), et est relié au premier trou de prise de son (770) à travers le trou traversant (410).

10. Dispositif terminal (100) selon la revendication 9, dans lequel le côté d'une paroi intérieure d'une extrémité qui est celle du premier trou d'entrée du son (250) et qui est reliée au trou traversant présente (410) une rainure (260) encastrée dans le côté de la paroi intérieure, et une extrémité de la rainure (260) se prolonge jusqu'à l'avant du boîtier (200) ; et
lorsque l'autre pièce d'amortissement (900) est disposée sur le trajet sur lequel l'onde sonore traverse le premier trou d'entrée du son (250) et agit sur le côté du diaphragme (731), l'autre pièce d'amortissement (900) est située dans la rainure (260) et recouvre complètement le trou traversant (410) ; et un côté de l'autre pièce d'amortissement (900) est fixé à l'autre extrémité de la rainure (260) et relié hermétiquement à celle-ci, et l'autre côté de l'autre pièce d'amortissement (900) est fixé à un côté de la carte de circuit imprimé terminal (400) et relié hermétiquement à celui-ci, et est opposé au microphone (700).

11. Dispositif terminal selon l'une quelconque des revendications 1 à 10, dans lequel le premier trou d'entrée du son (250) et le second trou d'entrée du son (330) sont chacun situés à une position proche du sommet du dispositif terminal (100).
